# EUROPEAN PATENT APPLICATION

(11) **EP 4 687 128 A1**
(43) Date of publication of application: **04.02.2026**
(21) Application number: 24465553.6
(22) Date of filing: 01.08.2024
(51) Int. Cl.: G08G 1/00

(54) **SAFETY CONTROL METHOD AND SYSTEM**

(71) Applicant: AUMOVIO Autonomous Mobility Germany GmbH, 85057 Ingolstadt (DE)
(72) Inventor: Velicu, Ioana-Laura, 300704 Timisoara (RO); Burca, Cristian, 300704 Timisoara (RO); Bodea, Daniel-Constantin, 300704 Timisoara (RO)
(74) Representative: Aumovio Corporation

(57) **Abstract**

The present invention is related to a safety control method performed by data processing means of an autonomous vehicle on data acquired by sensing means from a plurality of traffic participants in the vicinity of the autonomous vehicle, wherein the data include consecutive datasets of time-stamped attributes of each traffic participant, transmitted with a predefined data transmission frequency.

According to invention, the method comprises:
Checking (101) data transmission frequency, by comparing the data transmission frequency with the predefined one,
Performing (102) confidence interval construction based on a current dataset, and providing a current extended confidence interval,
Performing (103) future signal analysis, and providing a subsequent confidence interval based on a subsequent dataset,
Assessing (104) plausibility of an event by comparing the current extended and subsequent confidence intervals.

In addition, a safety control module for monitoring a plurality of traffic participants in the vicinity of an autonomous vehicle is provided. According to invention, the safety control module (10) comprises:
a memory (11) storing instructions;
at least one transmission interface (12); and
at least one processor (13) coupled to the memory (11) via the transmission interface (12), the processor (13) being configured by the instructions to receive consecutive datasets of time-stamped attributes of each traffic participant of the plurality of traffic participants, transmitted with a predefined data transmission frequency.

## Description

The present invention relates to a safety control method and system designed to reduce incidence of SOTIF-induced false positive reactions of automotive systems, in particular autonomous vehicles.

The invention concerns the technical field of autonomous vehicle safety, specifically focusing on enhancing the reliability and robustness of autonomous driving systems.

A critical challenge in the deployment of autonomous vehicles is the reducing of false positive reactions induced by safety of the intended functionality (SOTIF) issues. SOTIF refers to situations where the intended functionality of the vehicle's systems may not be safely achieved due to performance limitations or insufficient understanding of the operating environment. In other words, SOTIF is an emerging critical area that emphasizes risks arising from performance limitations rather than system faults. False positive reactions in autonomous vehicles occur when the system incorrectly identifies a harmless situation as a potential hazard, triggering unnecessary evasive actions such as sudden braking, swerving, or slowing down. These reactions can disrupt traffic flow, reduce passenger comfort, and potentially lead to accidents. Addressing these issues is crucial for improving the trust and acceptance of autonomous driving technology by the general public. For autonomous vehicles to be successfully incorporated into our society, it is essential to have not only fully developed automation systems but also a high level of confidence in their safety measures.

To the best of our knowledge, there is currently no developed mechanism specifically designed to reduce the incidence of SOTIF-induced false positive reactions in autonomous vehicles. This field is still in its infancy, and the technologies available so far are very limited. Existing approaches, for instance, include methods such as introducing silent testing techniques to assess autonomous vehicle perception and validate safety, as disclosed by [1] "Runtime unknown unsafe scenarios identification for SOTIF of autonomous vehicles", authors Cheng Wang, Kai Storms, Ning Zhang, Hermann Winner, published in 2024, "Accident Analysis & Prevention" Journal, Volume 195, 107410, ISSN 0001-4575, https://doi.org/10.1016/j.aap.2023.107410; evaluating SOTIF-oriented perception effectiveness for forward obstacle detection, as described in [2] "SOTIF-Oriented Perception Evaluation Method for Forward Obstacle Detection of Autonomous Vehicles," authors, J. Chu, T. Zhao, J. Jiao, Y. Yuan and Y. Jing, published in IEEE Systems Journal, vol. 17, no. 2, pp. 2319-2330, June 2023, doi: 10.1 109/JSYST.2023.3234200; or using SOTIF scene collections with self-update mechanisms (patent US 2024174262 A1).

However, none of these solutions, as far as we have been able to ascertain, propose a practical implementation specifically aimed at reducing the incidence of SOTIF-induced false positive reactions in autonomous vehicles.

It is an object of the present invention to detect scenarios where other road users may appear to exhibit implausible behavior due to performance limitations or insufficient understanding of the operating environment.

This object is solved by a safety control method with the features of independent claims, able to detect instances where the actions of traffic participants (pedestrians, cyclists, or other vehicles) might be mistakenly perceived as erratic or hazardous by an autonomous vehicle.

The invention relies on the detection and analysis of the behavior of other traffic participants. For this purpose, there are used mobility-related data, such as position (first attribute), velocity (second attribute), acceleration (third attribute) of traffic participants, all of them being scalar quantities, projections of the position, velocity, and acceleration vectors on the three axes of the Cartesian coordinate system - oX, oY, and oZ. Along with them, a fourth attribute used is time. For a given moment in time (t0), the first attribute value of a particular traffic participant is known (measured or received). Standard deviation of this first attribute is also known. Using these two values, a confidence interval is constructed. Additionally, the second attribute value of this participant at the same moment in time (t0), along with respective attribute standard deviation, is known (measured or received). Knowing the time cycle until the next set of data is received, the previously constructed confidence interval is extended to reflect the maximum limits within which the traffic participant possibly navigate or behave at the moment of next iteration based on the second attribute. At the next iteration, a new confidence interval for the first attribute of the same traffic participant is constructed. The two confidence intervals (the extended one and the one from the second iteration) are then compared. If these two intervals overlap, an event is declared plausible; otherwise, it is declared implausible. This procedure is similarly applied to one, two or all three coordinate axes.

By recognizing and accurately assessing these situations, the invention aims to prevent false positive reactions, thereby enhancing the overall safety and reliability of autonomous driving systems. Our inventive mechanism represents a groundbreaking advancement in this emerging field, offering a novel and practical solution that fills a critical gap and has the potential to significantly enhance autonomous vehicle safety and performance.

The dependent claims include advantageous further developments and improvements of the present invention.

According to an aspect of the invention, there is provided a safety control method performed by data processing means of an autonomous vehicle on data acquired by sensing means from a plurality of traffic participants in the vicinity of the autonomous vehicle. The data include consecutive datasets of time-stamped attributes of each traffic participant, transmitted with a predefined data transmission frequency. The method comprises: checking data transmission frequency by comparing the data transmission frequency with the predefined one, performing confidence interval construction based on a current dataset, and providing a current extended confidence interval, performing future signal analysis, and providing a subsequent confidence interval based on a subsequent dataset, and assessing plausibility of an event by comparing the current extended and subsequent confidence intervals.

In one embodiment of the present invention, the first attribute is position and the second attribute is velocity of other traffic participants. The data used are 2D or 3D (for the 2D plane of the road, if there is no aerial movement, there are used values for the projections on only two of the Cartesian system's axes. In scenarios involving aerial movement, there are projections on the third axis.). The technical effect is that any event deemed implausible by running the method based on the combination of these two attributes is signaling of a localization-based event.

In further embodiments of the present invention, there are used combinations of:
position, velocity, acceleration, and time; velocity, acceleration, and time;
velocity, acceleration, and position.

In case acceleration is used, the maximum acceleration/deceleration capabilities of traffic participants across different categories.

Further aspects of the invention are described below. It will be apparent to those skilled in the art that the above features of embodiments of the safety control method may also be used in conjunction with the following aspects of the invention and vice versa.

According to another aspect of the invention, there is provided a safety control module, for monitoring of a plurality of traffic participants in the vicinity of an autonomous vehicle, comprising: a memory storing instructions; at least one transmission interface; and at least one processor coupled to the memory via the transmission interface, the processor being configured by the instructions to receive consecutive datasets of time-stamped mobility attributes of each traffic participants of the plurality of traffic participants, transmitted with a predefined data transmission frequency. The safety control module is configured further to check data transmission frequency, to perform future signal analysis, to provide a subsequent confidence interval based on a subsequent dataset, and to assess plausibility of an event by comparing the current extended and subsequent confidence intervals.

Direct implementation of the invention within autonomous vehicles enhance their safety and reliability. The invention enables an autonomous vehicle to differentiate between plausible and implausible behaviors of other traffic participants, reducing the likelihood of accidents caused by false positive reactions. The inventive mechanism can be applied for the development of algorithms using the silent testing method, enabling more accurate and reliable detection systems. Additionally, it can be utilized for both software and hardware development, significantly improving sensor performance and ensuring more robust data processing capabilities.

For a better understanding of the principle of the present invention, embodiments of the invention will be explained in more detail below with reference to the figures. Like reference numerals are used in the figures for the same or equivalent elements and are not necessarily described again for each figure. It is to be understood that the invention is not limited to the illustrated embodiments and that the features described may also be combined or modified without departing from the scope of the invention as defined in the appended claims.

### Figures

Fig. 1 shows schematically a safety control module comprising an embodiment of the invention, and
Fig. 2 shows a flow chart of a safety control method according to the invention.

### Detailed description

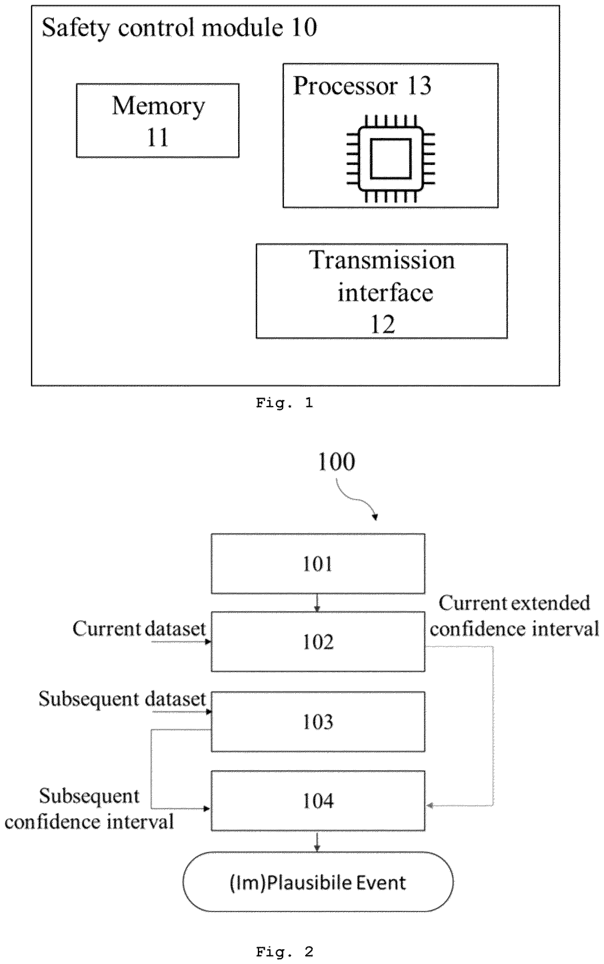

Figure 1 schematically shows a safety control module 10 for processing data of a plurality of traffic participants in the vicinity of an autonomous vehicle, according to the invention. Safety control module 10 comprises a memory 11 storing instructions, transmission interface(s) 12 (for example, traditional buses like CAN, LIN, CAN FD or Automotive Ethernet), and at least one processor 13 coupled to the memory 11.

Data from a plurality of traffic participants in the vicinity of an autonomous vehicle are acquired by sensing means (the sensing means being camera, radar, lidar sensors, for example) and pre-processed by a sensor fusion module (not illustrated nor referenced), a sub-unit of data processing systems of the autonomous vehicle, able to combine sensor data or data derived from disparate sources and to track and detect, recognize or identify objects (in this case, traffic participants). Datasets are transmitted and processed in real time, but there is also a possibility to receive them via V2X/V2E services (not part of this invention), from cloud, online or offline. There are consecutive datasets of time-stamped values of mobility attributes of each traffic participant, measured and transmitted with a known data transmission frequency (for example, 10Hz). For the method to function properly, the default value of the frequency must match the data transmission frequency. Otherwise, it will not work. However, the method is adaptable to any frequency value as long as it remains constant during its operation.

Mobility attributes include, for example, values along x-axis, y-axis, or z-axis of position, velocity (relative speed), acceleration/deceleration as well as their respective standard deviations.

Figure 2 shows a sketch of an embodiment of a safety control method 100, illustrated as a diagrammatic flowchart. The embodiment is a localization-based safety control method, it is performed by a safety control module 10 and comprises: checking 101 data transmission frequency to be equal to the predefined data transmission frequency. In case the two values don't match; performing 102 confidence interval construction based on a current dataset, by computing confidence intervals based on current position data along the x-axis and y-axis, and known position standard deviation n*σ*. More precisely, performing 102 confidence interval construction comprises: computing 1021 confidence interval based on position along the x-axis and y-axis and position standard deviation n*σ*, extending 1022 the previous computed confidence interval based on velocity attributes and data communication frequency, thus providing a current extended confidence interval for position.

The next step is performing 103 future signal analysis based on a subsequent dataset, meaning the dataset comprising position and velocity values measured in a subsequent measurement cycle. Performing 103 future signal analysis comprises computing subsequent confidence interval based on a subsequent position along the same axes (x-axis and y-axis, in this example) and the position standard deviation n*σ* at a subsequent measurement cycle, thus providing a subsequent confidence interval for object's position.

Finally, assessing 104 plausibility of an event (in this case, a localization-based event) comprises checking 1041 if there is any intersection between the previously computed initial extended confidence interval and subsequent confidence interval, and either deeming plausible 1041t or implausible 1041f the localization-based event.

In the following, a numerical example related to the embodiment shown in Fig. 2 is used to further explain the localization-based safety control method.

### Example:

S101: Data transmission frequency:10 Hz
S102: Line 26 (x = 7,7745275, n = 3)
S1021: Building the confidence interval based on position on the x-axis and standard deviation n*σ*:
   [x26 - n*σ* ; x26 + n*σ*] → [5,82896378; 9,72009122]
S1022: Extend this confidence interval based on object's velocity attributes:
   [(x26 - n*σ*) - (0.1*(vx26 - n‴));
   (x26 + n*σ*) + (0.1*(vx26 + n*σ*))] → [5,36419647; 10,47378411] the current extended confidence interval provided
S103: Building the confidence interval based on the position on the x-axis and y-axis and the standard deviation n*σ* of next measurement cycle (0,1s jump):
   [x38 - n*σ* ; x38 + n*σ*] → [6,18984582; 10,05772818] the subsequent confidence interval provided
S104: Checking if there is any overlapping between the current extended and the subsequent confidence interval:
   S1041t If yes, a localization-based event is plausible.
   S1041f If no, the localization-based event is implausible.

Other embodiments of the safety control method 100 are performed by combining various other mobility attributes, such as: position, velocity, acceleration, and time; velocity, acceleration, and time; velocity, acceleration, and position.

Classifying the events takes into consideration the first mobility attribute: position, velocity, acceleration, etc. based events are signaled and used in order to proceed to further actions concerning the autonomous vehicle and its surroundings.

Optionally, the safety control module is configured to track a traffic participant behavior in the surrounding environment of an autonomous vehicle, in particular an implausible behavior due to performance limitations or sufficient understanding of the operating environment. This involves identifying and interpreting instances where the actions of pedestrians, cyclists, or other vehicles might be mistakenly perceived as erratic or hazardous by the autonomous vehicle.

Optionally and/or alternatively, the safety control module is configured to recognize a state of an object at the exterior of the autonomous vehicle. Optionally and/or alternatively, the safety control module is configured to activate and/or control an autonomous vehicle function.

Alternative use cases are the following:
Traffic management and monitoring, to monitor the behavior of autonomous vehicles on the road. The invention helps identifying potential safety issues and improve traffic flow by providing real-time data on vehicle interactions;
In R&D phase of autonomous vehicle development to test and validate the performance of new models and systems, to simulate various traffic scenarios and analyze how the vehicle responds to different conditions;
Vehicle Security Systems: by using this mechanism, proximity sensors on parked vehicles may detect implausible behaviors nearby, such as rapid movements or sudden approaches by objects. This would reduce the number of false alarms by triggering the alarm only in cases of genuine danger.

Building Security Systems: to detect unusual movements or activities inside and around the building. This would reduce false alarms, triggering alarms only for activities considered genuinely dangerous. Surveillance cameras can be equipped with this functionality to analyze detected movements and behaviors, deciding if they are plausible or not. This would reduce false alarms and improve response to real incidents.

Drones and Unmanned Aerial Vehicles (UAVs): navigation and collision avoidance, to monitor the positions and movements of nearby objects, ensuring safe navigation and collision avoidance by distinguishing between plausible and implausible events. Industrial Automation: in industrial settings, robotic arms and machinery may use this mechanism to detect anomalies in their operational environment. This ensures safe operation by preventing accidents caused by implausible movements or unexpected obstacles;
Agriculture: by automated farming equipment (tractors, harvesters, etc.) to monitor their environment, ensuring safe and efficient operation by detecting implausible obstacles or terrain changes.

By recognizing and accurately assessing these situations, the invention aims to prevent false positive reactions, thereby enhancing the overall safety and reliability of autonomous driving systems.

## Claims

1. A safety control method (100) performed by data processing means of an autonomous vehicle on data acquired by sensing means from a plurality of traffic participants in the vicinity of the autonomous vehicle,
wherein the data include consecutive datasets of time-stamped attributes of each traffic participant, transmitted with a predefined data transmission frequency,
**characterized in that** the method comprises:
Checking (101) data transmission frequency, by comparing the data transmission frequency with the predefined one,
Performing (102) confidence interval construction based on a current dataset, and providing a current extended confidence interval,
Performing (103) future signal analysis, and providing a subsequent confidence interval based on a subsequent dataset,
Assessing (104) plausibility of an event by comparing the current extended and subsequent confidence intervals.

2. The method of claim 1, **characterized in that** the attributes include values of position, velocity, and acceleration, along their respective standard deviations, expressed by 2D or 3D data.

3. The method of claim 1, **characterized in that** performing (102) confidence interval construction comprises:
Computing (1021) confidence interval based on a current value and standard deviation (n*σ*) of a first attribute, and
Extending (1022) the previous computed confidence interval based on a current value of a second attribute and data transmission frequency, and providing a current extended confidence interval for the first attribute.

4. The method of previous claims, **characterized in that** performing (103) future signal analysis comprises computing subsequent confidence interval based on a subsequent value of the first attribute, and the standard deviation (n*σ*) of the first attribute and providing a subsequent confidence interval for the first attribute.

5. The method of previous claims, **characterized in that** assessing (104) plausibility of an event comprises checking (1041) if there is any intersection between the previously computed initial extended confidence interval and subsequent confidence interval, and either deeming plausible (104t) or implausible (104f) the event linking the first and second attributes.

6. The method of previous claims, **characterized in that** the datasets are continually transmitted, at a data transmission frequency which is predefined.

7. The method of previous claims, **characterized in that** the initial and subsequent confidence interval are computed in real time.

8. The method of previous claims, **characterized in that**, in case the event is deemed implausible, at least a further action is triggered, such as storing the datasets used for assessing the event as plausible or recording the datasets transmitted starting with the moment of assessment of the event as plausible.

9. The method of previous claims, **characterized in that** the events able to be assessed as implausible are position, velocity, or acceleration-based.

10. A safety control module (10) for monitoring a plurality of traffic participants in the vicinity of an autonomous vehicle, comprising:
a memory (11) storing instructions;
at least one transmission interface (12); and
at least one processor (13) coupled to the memory (11) via the transmission interface (12), the processor (13) being configured by the instructions to receive consecutive datasets of time-stamped attributes of each traffic participant of the plurality of traffic participants, transmitted with a predefined data transmission frequency, **characterized in that** the safety control module is configured further to:
Check (101) data transmission frequency, by comparing the data transmission frequency with the predefined one,
Perform (102) confidence interval construction based on a current dataset, and providing a current extended confidence interval,
Perform (103) future signal analysis, and providing a subsequent confidence interval based on a subsequent dataset,
Assess (104) plausibility of an event by comparing the current extended and subsequent confidence intervals.

11. The safety control module (10) according to claim 10, **characterized in that** the safety control module (10) is configured to further activate and/or control an autonomous vehicle function.

12. The localization-based safety control module (10) according to claim 10,
**characterized in that** the safety control module (10) is configured for the recognition of a safety-critical situation.

13. A non-transitory computer storage medium, comprising program instructions configured to implement the method according to claim 1.

14. A computer program product comprising a computer program configured to be executed by a processor to implement the method according to claim 1.
